**Europäisches Patentamt**

**European Patent Office**

**Office européen des brevets**

(11) Publication number: **0 122 686**
**B1**

## EUROPEAN PATENT SPECIFICATION

(45) Date of publication of patent specification: **10.01.90**

(21) Application number: **84300357.5**

(22) Date of filing: **20.01.84**

(51) Int. Cl.⁵: **C 08 J 5/18, C 08 K 7/00, C 08 L 23/02, C 08 K 3/34, B 29 C 55/18**

(54) Thermoplastic resin sheet-like material and its production.

(30) Priority: **21.01.83 JP 9169/83**

(43) Date of publication of application:
**24.10.84 Bulletin 84/43**

(45) Publication of the grant of the patent:
**10.01.90 Bulletin 90/02**

(84) Designated Contracting States:
**DE GB**

(56) References cited:
**EP-A-0 069 937**
**FR-A-2 181 941**
**GB-A-1 044 028**
**GB-A-1 044 502**
**US-A-3 503 843**

(73) Proprietor: **KURARAY CO., LTD.**
**1621 Sakazu**
**Kurashiki-City Okayama Prefecture 710 (JP)**

(72) Inventor: **Ueeda, Ryuhei**
**760-2, Fukushima**
**Kurashiki-city Okayama-Pref. (JP)**
Inventor: **Fujii, Kiyonobu**
**103-4, Kawabe Mabi-cho**
**Kibi-gun Okayama-pref. (JP)**
Inventor: **Narukawa, Hiroshi**
**1433-10, Misu**
**Soja-city Okayama-pref. (JP)**

(74) Representative: **Crampton, Keith John Allen et al**
**D YOUNG & CO 10 Staple Inn**
**London WC1V 7RD (GB)**

Courier Press, Leamington Spa, England.

## Description

The present invention relates to rolled or pressed thermoplastic resin sheet-like materials.

Thermoplastic resin sheet-like materials and products obtained by such processes as vacuum forming, pressure forming and stamping them are widely used in various applications, including vessels, parts of cars and parts of electric instruments. It is, however, well known that the addition of flaky fillers to thermoplastic resin leads to a remarkable improvement in strength and elasticity when this is required, particularly when anisotropism is undesirable. In the case when still higher strength and modulus of elasticity are desired, as disclosed in for example Japanese Laid-Open Patent Application JP—A—161667/1979, this can be achieved by rolling the compound at temperatures higher than its melting point to orientate flaky fillers. It is, however, a great disadvantage that, when flaky fillers are added to thermoplastic resin as reinforcing fillers, the compound becomes brittle, that is to say it shows low toughness and reduced impact resistance, in particular reduced Izod impact strength. This tendency becomes more noticeable with the orientation of flaky fillers. On the other hand, as disclosed in Japanese Laid-Open Patent Application JP—A—27203/1980, the transparency of thermoplastic resin sheet-like materials can be improved by stretching or rolling them at temperatures lower than the melting point of thermoplastic resin; and as disclosed in US Patent US—A—4,282,277, the toughness of resins can be improved by rolling them at temperatures lower than their melting point. However, in cases when flaky fillers are added to the compound, the stretched or rolled products show whitening, owing to stripping of the surface; the improvement of physical properties is unsatisfactory; or the dimensional resistance at high temperatures is low, so that the products have no practical use.

According to the invention, there is provided isotropically rolled or pressed sheet-like material comprising a mixture of 20 to 90% by weight of a thermoplastic resin and 10 to 80% by weight of a flaky filler, wherein:

(a) the degree of crystallinity is 10% or more;

(b) whitening is not observed in the surface layer when the surface layer is observed by a scanning electron microscope;

(c) the degree of orientation of crystals in the crystal plane parallel to the molecular chain, as determined by X-ray diffraction, is 55% or more as determined by the equation

Percentage degree of orientation = (180 − H)/180 × 100

where H is the half-value width of the orientation distribution curve;

(d) the percentage change in thickness, when heated for one hour at a temperature 20°C lower than that at which crystals of the thermoplastic resin begin to melt, and then cooled to room temperature, is 2% or less;

(e) the notched Izod impact strength test value is at least twice that of the corresponding unrolled or unpressed sheet-like material; and

(f) the toughness is at least 1.5 times that of the corresponding unrolled or unpressed sheet-like material.

The invention further provides a process for preparing such material wherein material comprising a mixture of 20 to 90% by weight of a thermoplastic resin and 10 to 80% by weight of a flaky filler is rolled or pressed at a temperature above that at which the resin begins to melt and below that at which melting of the resin is complete, and a product having the specified properties is obtained.

The process normally comprises isotropically rolling or pressing sheet-like materials obtained by melting, blending and forming a mixture of 20 to 90% by weight of thermoplastic resin having a degree of crystallinity of 10% or more and 10 to 80% by weight of flaky filler, orientating the crystals after a part of them have been melted at the melting point of the sheet-like materials and then recrystallizing the melted crystals under the rolled or pressed condition.

Rolled or pressed sheet-like materials showing excellent mechanical properties such as strength and modulus of elasticity in particular excellent toughness and high-impact properties, and not showing anisotropy and whitening but having good appearance, can be made in accordance with the present invention. Rolled or pressed sheet-like materials showing high heat-resistance and high dimensional resistance at elevated temperatures can be obtained.

Thermoplastic resins having a degree of crystallinity of 10% or more used in the present invention include polyethylene, polypropylene, nylon-6, nylon-66, polyethylene terephthalate and polybutylene terephthalate. Polyethylene and polypropylene are preferred, in particular, polyethylene having molecular weight of 50,000 or more and polypropylene having molecular weight of 250,000 or more. Modified resins and blends of resins can also be used.

Flaky fillers used in the present invention include mica, glass flakes and talc. Mica is preferred, e.g. phlogopite, muscovite or fluorine mica. It is necessary for these fillers to be flaky. Powdery and fibrous fillers, which are not flaky, have little effect in the present invention. The weight-average particle diameter of the flaky fillers is desirably 1.5 mm or less to obtain good appearance of sheet-like materials after forming. Besides, an aspect ratio (weight-averaged) of the flaky fillers of 10 or more is desirable in respect of the strength and elastic modulus of the sheet-like materials after forming.

If the flaky fillers are used at a ratio less than 10% by weight, the effects according to the present invention can be hardly achieved while sheet-like materials can not be easily formed if the fillers are used at a ratio of more than 80% by weight.

Also any fillers other than mica such as calcium carbonate, glass beads, silica, glass fibre, carbon fibre, aramide fibre, woodmeal and titanium compounds can be supplementarily used in the manufacture of tough thermoplastic resin sheet-like materials according to the present invention. In addition, pigments, stabilizers, lubricants, silane coupling agents, ultra-violet light absorbers and heat deterioration inhibitors can be used if necessary.

Melting point range as expressed in the present specification indicates the range from the temperature at which the resin crystals begin to melt to the temperature at which the melting of the resin is complete. It can be determined by differential scanning calorimetric analysis (DSC). The heating-melting behaviour of crystalline thermoplastics is generally observed by means of DSC. When crystalline thermoplastics are melted by being heated at a constant rate in air or nitrogen gas, an endothermic curve can be plotted. The lower temperature side of this curve or of the base line is the temperature at which the resin begins to melt; the higher temperature side is the temperature at which melting of the resin is completed. Although sheet-like materials according to the present invention can be manufactured by isotropically rolling or pressing them in the melting point range, they are preferably rolled or pressed at the temperature corresponding to the summit of the absorption peak in order to obtain still better results. Although such characteristic temperatures are also dependent upon the heating rate, they in general sufficiently agree with the practical fabrication conditions if the measurement is carried out within the heating rate range of 5 to 20°C/min. These characteristic temperatures are almost independent of the ratio of flaky filler to resin.

The degree of crystallinity of the thermoplastic must be 10% or more. When thermoplastics having the degree of crystallinity less than 10% are used, it is not possible to produce rolled or pressed sheet-like materials that have superior mechanical properties, such as notched Izod impact strength and toughness, as well as superior dimensional resistance. Although the degree of crystallinity of thermoplastics can also be determined by such methods as measurement of density and IR spectra, its determination on the basis of X-ray diffraction or the measurement of heat of fusion is accurate for the purposes of the present invention and is therefore preferred.

The rolled or pressed sheet-like materials must have a degree of orientation of 55% or more. If they have a degree of orientation of less than 55%, they can not satisfy the mechanical performance sought by the present invention. The degree of orientation can be calculated from the following equation, in which H is the half-value width of the orientation-distribution curve determined by X-ray diffraction in the crystal plane parallel to the molecular chain:

Percentage degree of orientation = $(180 - H)/180 \times 100$

Furthermore, the percentage change in thickness calculated from measurements at a temperature lower by 20°C than the temperature at which the crystals of resin begin to melt is 2% or less. After rolled or pressed sheet-like materials were heated for one hour at the said temperature, followed by being cooled to room temperature, the percentage change in thickness is calculated.

Rolled or pressed sheet-like materials showing a percentage change in thickness larger than 2% are not substantially superior in dimensional resistance at high temperature.

In addition, the notched Izod impact strength of rolled or pressed sheet-like materials must be at least twice that of the unrolled or unpressed sheet-like materials and the toughness of the rolled or pressed sheet-like materials must be at least 1.5 times that of the unrolled or unpressed sheet-like materials. Notched Izod impact strengh is measured in accordance with ASTM D 256. Toughness can be calculated by (flexural strength × flexural deflection × 1/2) on the basis of flexural strength and flexural deflection measured in accordance with ASTM D—790. Rolled or pressed sheet-like materials having a notched Izod impact strength and toughness that do not satisfy the above described values are not superior in mechanical performance.

Sheet-like materials according to the present invention can be several mm thick or can be films as litte as 10 μm thick. Such sheet-like materials are manufactured by isotropically rolling or pressing a sheet-like material obtained by forming a mixture of molten crystalline thermoplastic resin and flaky fillers by means of an extruder and a T-die, orientating the crystals, after a part of them has melted, at the melting point of the sheet-like material, and then recrystallizing the melted crystals under the rolled or pressed condition. As described above, it is necessary that the material should partially remain crystalline when the sheet-like material is rolled or pressed in the practice of the present invention. When the sheet-like material is formed by means of an extruder and a T-die and subsequently rolled or pressed, it is necessary to cool it, before it is isotropically rolled, or pressed, to a temperature at which at least a part of the sheet-like material is crystallized, i.e. a temperature in the range from that at which crystallization starts to that at which crystallization is completed. If the sheet-like material is exposed to temperatures higher than its melting point while rolling or pressing or after rolling or pressing, it loses its toughness and high-impact properties. Furthermore, if the sheet-like material is rolled or pressed at a temperature lower than its melting point, a strain is produced at the interface between flakes and resin by movement of the flakes. As a result, the superficial layer of the sheet-like material is stripped by a thickness about the same as that of the thickness of flakes, whereby the sheet-like materials are whitened. Also, the dimensional resistance of the resulting sheet-like materials at high temperatures is lowered. Whitening of the sheet-like materials leads to a remarkable deterioration of their mechanical properties, in particular of high-impact properties and toughness. The occurrence of whitening can be easily confirmed by scanning electron microscopy.

Although the present invention is in general practised at a rolling or pressing ratio of 1.5:1 to 20:1, the optimum rolling or pressing ratio depends upon a number of variables, including the kind of polymer, the mixing ratio of polymer and filler, the kind of filler, the particle size of filler, and the aspect ratio. For example, when 90 parts by weight of polypropylene is mixed with 10 parts by weight of mica having an average particle diameter of 40 µm, the physical properties of the sheet-like materials are improved at rolling or pressing ratios up to 6:1, but there is no further improvement at a rolling or pressing ratio more than 6:1. On the other hand, for example, when 60 parts by weight of polypropylene is mixed with 40 parts by weight of mica having an average particle diameter of 70 µm, the toughness and high-impact properties are continuously improved until the rolling or pressing ratio reaches 18:1.

Machinery such as a flat sheet press or a roll press can be used for manufacturing rolled or pressed sheet-like materials according to the present invention. When a roll press is used, the sheet-like material is passed through it at least twice in each of the longitudinal and transverse directions.

The present invention will be described below in the Examples which illustrate some preferred embodiments. All parts and percentages are by weight.

### Example 1 and Comparative Examples 1, 2 and 3

40 parts of phlogopite having an average particle diameter of 40 µm and an aspect ratio of 35 (Suzorite mica 325—S sold by Kuraray Co. Ltd.) was mixed with 60 parts of polypropylene having molecular weight of 400,000. The resulting mixture was molten and blended in an extruder of 40 mm diameter. The resulting molten blend was extruded through a T-die having a width of 200 mm so as to form sheets. The resulting sheets were chilled by rolls, through which water at 80°C was circulated. Sheets 6 mm thick and 2 mm thick were obtained.

Differential thermal analysis was carried out by a differential scanning calorimeter manufactured by Rigaku Denki Co. Ltd. It was applied to a 10-mg sample of the resulting sheets in air at a heating rate of 10°C/min in the measuring temperature range from room temperature to 350°C. As a result, a heat absorption curve due to the fusion of crystals of polypropylene at 155°C (the temperature at which crystals begin to melt) to 170°C (the temperature at which the melting of crystals is completed) was obtained with the peak at 163°C. The sheets 6 mm thick were preliminarily heated to 163°C, the peak temperature, and then pressed to a thickness of 3 mm (at a pressing ratio of 2:1) by means of a hydraulic press. After the pressed sheets had been cooled to room temperature without eliminating the pressure, the flexural strength, flexural deflection and flexural modulus in accordance with ASTM D 790 and the Izod impact strength (notched) in accordance with ASTM 256 were evaluated. The results are shown in Table 1. In addition, the values of (flexural strength × flexural deflection × 1/2) as the measure of toughness were calculated. These values are also shown in Table 1.

The sheets 2 mm thick were preliminarily heated to 163°C and then pressed at 163°C to a thickness of 1 mm by means of a hydraulic press (pressing ratio of 2:1). The pulling strength of the pressed sheets 1 mm thick were tested in accordance with ASTM D 638 (Example 1). The degree of crystallinity and the degree of orientation of crystals determined by X-ray diffraction are also shown in Table 1.

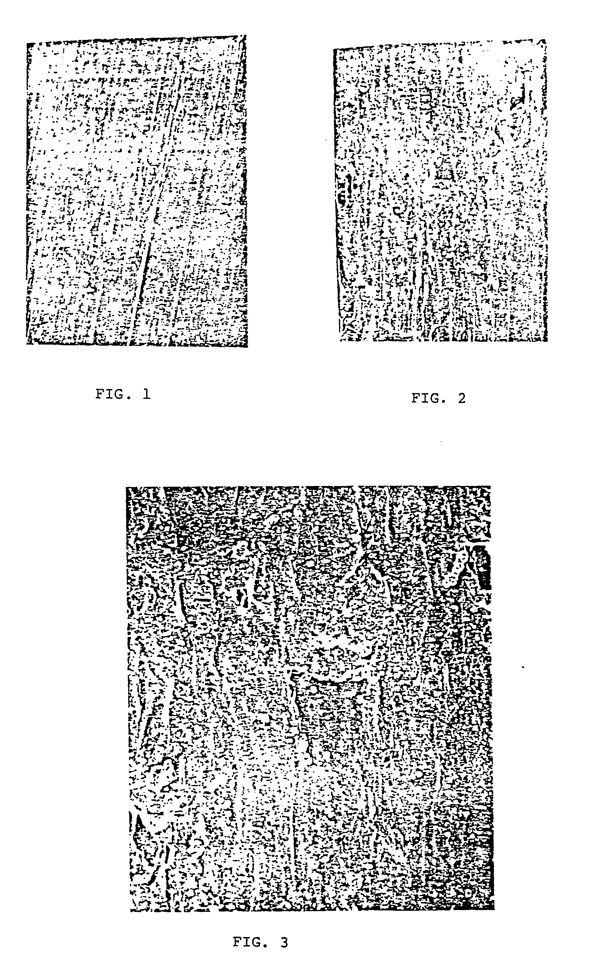

After heating the 3 mm thick pressed sheets at 135°C (which is 20°C lower than the temperature at which the crystals begin to melt) for one hour and then cooling them to room temperature, their thickness was measured. The percentage change in thickness was calculated and the results are shown in Table 2. The superficial layer of pressed sheets obtained according to Example 1 was observed by scanning electron microscopy (magnification of 150). As shown in Fig. 1, whitening was not found.

Then the sheets 6 mm thick and 2 mm thick were preliminarily heated to 140°C and then pressed at 140°C (a temperature lower than that at which the crystals begin to melt) by means of a hydraulic press in the same manner as in Example 1.

The physical properties of the resulting pressed sheets were evaluated in the same manner as in Example 1. The results are shown in Table 1 (Comparative Example 1). The percentage change in thickness of the resulting pressed sheets 3 mm thick was calculated and the results are shown in Table 2. The resulting pressed sheets obtained in Comparative Example 1 were observed by scanning electron microscopy (magnifications of 150 and 500). As shown in Fig. 2 and Fig. 3, whitening was found in the superficial layer of the resulting pressed sheets.

The sheets 6 mm thick and 2 mm thick were preliminarily heated to 185°C and then pressed at 185°C (a temperature higher than that at which the melting of crystals is completed) by means of a hydraulic press in the same manner as in Example 1. The physical properties of the resulting pressed sheets were evaluated in the same manner as in Example 1. The results are shown in Table 1 (Comparative Example 2). Furthermore, the physical properties of unpressed sheets are shown in Table 1 as Comparative Example 3. The effects of the present invention are clearly seen from the results of Example 1 and Comparative Examples 1, 2, 3.

### Example 2 and Comparative Examples 4, 5 and 6

40 parts of phlogopite having an average particle diameter of 40 µm and an aspect ratio of 35 was mixed with 60 parts of high-density polyethylene having a molecular weight of 65,000. The resulting mixture was molten and blended in an extruder of 40 mm diameter. The resulting molten blend was extruded through a T-die having a width of 200 mm so as to form sheets. The resulting sheets were chilled by rolls through which water at 80°C was circulated. Sheets 6 mm thick and 2 mm thick were obtained.

By differential thermal analysis, a heat absorption curve due to the fusion of crystals of polyethylene at 118 to 150°C was obtained with the peak at 132°C. The sheets 6 mm thick and 2 mm thick were preliminarily heated to 132°C, the peak temperature, and then pressed to a thickness of 3 mm and 1 mm respectively (rolling ratio of 2:1 in each case) by means of a hydraulic press. After being cooled to room temperature without eliminating the pressure, the same physical properties as in Example 1 were evaluated. The results are shown in Table 1 (Example 2). The percentage change in the thickness of the 3-mm pressed sheets at 98°C was calculated and the results are shown in Table 2. Furthermore, the superficial layer of the pressed sheets obtained in Example 2 was observed by scanning electron microscopy. As in Example 1, there was no whitening.

The sheets 6 mm and 2 mm thick were then preliminarily heated at 155°C and then pressed at 155°C (a temperature higher than the melting point) by means of a hydraulic press in the same manner as in Example 2, and the same physical properties as in Example 2 were evaluated. The results are shown in Table 1 (Comparative Example 4). Also the physical properties of the unpressed sheets are shown in Table 1 (Comparative Example 5).

The sheets 6 mm thick were preliminarily heated to 100°C and then pressed at 100°C (a temperature lower than the melting point) in the same manner as in Example 2. The same physical properties as in Example 2 were evaluated. The results are shown in Table 1 (Comparative Example 6). The percentage change in thickness of the resulting pressed sheets 3 mm thick was calculated and the results are shown in Table 2. The superficial layer of the resulting pressed sheets obtained in Comparative Example 6 was observed by scanning electron microscopy. As in Comparative Example 1, whitening was found. The effects of the present invention are clearly seen from Example 2 and Comparative Examples 4, 5, 6.

### Example 3 and Comparative Example 7

40 parts of glass flakes having an average particle diameter of 34 μm and an aspect ratio of 17 were mixed with 60 parts of polypropylene having a molecular weight of 200,000. The mixture was treated in the same manner as in Example 1 to produce sheets 6 mm thick, which were pressed in the same manner as in Example 1 to produce pressed sheets 3 mm thick. The physical properties of these were evaluated. The results are shown in Table 1, together with the physical properties of the unpressed sheets (Comparative Example 7).

### Example 4 and Comparative Example 8

40 parts of phlogopite having an average particle diameter of 1.5 mm and an aspect ratio of 150 was mixed with 60 parts of polypropylene having a molecular weight of 400,000. The mixture was treated in the same manner as in Example 1 to form sheets 6 mm thick and 3 mm thick. The former were pressed in the same manner as in Example 1 to produce pressed sheets 3 mm thick. Their physical properties are shown in Table 1, together with the physical properties of the unpressed sheets 3 mm thick (Comparative Example 8). The effects of the present invention are clearly seen from Example 4 and Comparative Example 8.

### Example 5 and Comparative Example 9

70 parts of phlogopite having an average particle diameter of 60 μm and an aspect ratio of 35 was mixed with 30 parts of nylon-6 (1022B manufactured by Ube Industries Ltd.). The resulting mixture was molten and blended in an extruder of 40 mm diameter at 240°C. The resulting molten blend was extruded through a T-die of width 200 mm to form sheets, which were cooled by rollers through which water at 80°C was circulated to produce sheets 6 mm thick and 3 mm thick. The heat absorption curve owing to the fusion of crystals of nylon-6 at 208 to 222°C was obtained by differential thermal analysis. The 6-mm sheets were preliminarily heated to 210°C and then pressed to the thickness of 3 mm at 210°C by means of a hydraulic press. The pressed sheets were cooled to room temperature without eliminating the pressure, and their physical properties were determined (Example 5). The physical properties of unpressed sheets 3 mm thick were determined for comparison (Comparative Example 9). The effects of the present invention are clearly seen from the results of Example 5 and Comparative Example 9, which are shown in Table 1.

### Example 6 and Comparative Examples 10, 11 and 12

20 part of glass flakes having an average particle diameter of 75 μm and an aspect ratio of 40 were mixed with 80 parts of an ethylene-propylene block copolymer. The resulting mixture was treated in the same manner as in Example 1 to form sheets 6 mm thick. Thermal analysis was applied to the sheets in the same manner as in Example 1. As a result, the heat absorption curve due to the fusion of crystals of the ethylene-propylene block copolymer from 121°C (the temperature at which crystals begin to melt) to 169°C (the temperature at which the melting of crystals was completed) was obtained with a peak at 163°C. The sheets 6 mm thick were preliminarily heated to 160°C and then pressed at 160°C by means of a hydraulic press to produce pressed sheets 3 mm thick (pressing ratio of 2:1). After being cooled to room temperature without eliminating the pressure, the pressed sheets were tested in the same manner as in Example 1. The physical properties are shown in Table 1 (Example 6). Pressed sheets 3 mm thick obtained in the same manner as in Comparative Examples 1 and 2 were also tested (Comparative Examples 10, 11), together with unpressed sheets (Comparative Example 12). The results are shown in Table 1. The percentage change in the thickness of pressed sheets of 3 mm thick obtained in Example 6 and Comparative Example 10 at 101°C was calculated and the results are shown in Table 2. The superficial layer of said pressed sheets was observed by scanning electron microscopy. Whitening was not found for the pressed sheets obtained in Example 6 but it was found for those obtained in Comparative Example 10. The effects of the present invention are clearly found from the results of Example 6 and Comparative Examples 10, 11 and 12.

Example 7

40 parts of phlogopite having an average particle diameter of 90 μm and an aspect ratio of 55 was mixed with 60 parts of polypropylene having molecular weight of 400,000. The resulting mixture ws extruded through a T-die having a width of 200 mm to form sheets 1 mm thick and 3 mm thick. Piled-up sheets 1 mm thick were preliminarily heated to 145°C (a temperature lower than the melting point), 155°C (the temperature at which crystals begin to melt), 163°C (the peak temperature), 170°C (the temperature at which the melting of crystals is completed) and 180°C (a temperature higher than the melting point), respectively and then pressed to a thickness of 3 mm at each of the above described temperatures by means of a hydraulic press. The pressing ratio was controlled in dependence upon the quantity of the 1-mm sheets in the pile. The physical properties of the pressed sheets obtained under the above described rolling conditions are shown in Table 3, together with the physical properties of unpressed sheets 3 mm thick obtained by extrusion molding. The percentage change in thickness of the pressed sheets 3 mm thick at 135°C was calculated and the results are shown in Table 2. The superficial layer of the pressed sheets obtained by pressing at 145°C, which is lower than the melting point, was observed by a scanning electron microscope. Whitening was found.

TABLE 1

| | Flexural Strength (yield value) (kg/cm²) | Flexural Deflection (yield value) (%) | Flexural Modulus (kg/cm²) × 10⁴ | Izod Impact Strength (notched) (kg·cm/cm) | Toughness (kg·%/cm²) | Pulling (yield value) (kg/cm²) | Strength (breaking value) (kg/cm²) | Pressed Sheet | Degree of Crystallization (%) | Degree of Orientation of Crystal (°) |
|---|---|---|---|---|---|---|---|---|---|---|
| Example 1 | 850 | 4.0 | 8.5 | 6.2 | 1700 | 420 | 400 | | 68 | 65 |
| Comparative Example 1 | 820 | 2.4 | 8.0 | 3.9 | 984 | 410 | 400 | whitening | 72 | 60 |
| 2 | 820 | 1.8 | 8.5 | 2.1 | 738 | 430 | 400 | | 69 | 50 |
| 3 | 730 | 2.2 | 7.7 | 2.3 | 803 | 400 | 360 | | 49 | 50 |
| Example 2 | 620 | 4.5 | 6.0 | 10.5 | 1395 | 420 | 390 | | 75 | 76 |
| Comparative Example 4 | 570 | 3.4 | 5.8 | 4.8 | 969 | 320 | 320 | | 70 | 53 |
| 5 | 570 | 3.0 | 5.6 | 4.9 | 855 | 320 | 310 | | 75 | 0 |
| 6 | 580 | 3.6 | 6.1 | 6.0 | 1044 | — | — | whitening | 75 | 53 |
| Example 3 | 820 | 3.6 | 7.0 | 4.7 | 1476 | — | — | | 75 | 68 |
| Comparative Example 7 | 720 | 1.9 | 6.2 | 2.3 | 684 | — | — | | 78 | 52 |
| Example 4 | 780 | 3.9 | 8.3 | 4.9 | 1521 | — | — | | 68 | 65 |
| Comparative Example 8 | 690 | 1.9 | — | 2.2 | 656 | — | — | | 48 | 45 |
| Example 5 | 1900 | 2.8 | 16 | 7.1 | 2660 | — | — | | 25 | 65 |
| Comparative Example 9 | 1800 | 1.3 | 15 | 3.0 | 1170 | — | — | | 25 | 53 |
| Example 6 | 470 | 7.2 | 2.5 | 58 | 1692 | — | — | | 70 | 70 |
| Comparative Example 10 | 480 | 6.8 | 2.5 | 15 | 1632 | — | — | whitening | 72 | 62 |
| 11 | 480 | 6.8 | 2.6 | 8 | 1632 | — | — | | 68 | 55 |
| 12 | 450 | 6.9 | 2.4 | 8 | 1553 | — | — | | 52 | 54 |

EP 0 122 686 B1

## EP 0 122 686 B1

### TABLE 2

| | Percentage Change of Thickness (%) | Atmospheric Temperature (°C) |
|---|---|---|
| Example 1 | 0.2 | 135 |
| Comparative Example 1 | 4.8 | 135 |
| Example 2 | 0.2 | 98 |
| Comparative Example 6 | 6.0 | 98 |
| Example 6 | 0.2 | 101 |
| Comparative Example 10 | 5.2 | 135 |
| Example 7 | 0.1 | 135 |

TABLE 3

| Pressing ratio | Pressing Temperature (°C) | Flexural Strength (yield value) (kg/cm$^2$) | Flexural Deflection (yield value) (%) | Flexural Modulus (kg/cm$^2$) $\times 10^4$ | Izod Impact Strength (notched) (kg·cm/cm) | Toughness (kg·%/cm$^2$) | Pressed sheet |
|---|---|---|---|---|---|---|---|
| 1 (Unrolled) | | 740 | 2.1 | 7.1 | 3.0 | 777 | |
| 2 | 163 | 860 | 4.0 | 9.0 | 6.5 | 1720 | |
| 3 | 163 | 920 | 4.5 | 8.8 | 15 | 2070 | |
| 6 | 163 | 840 | 5.2 | 7.2 | 22 | 2184 | |
| 18 | 170 | 800 | 5.5 | 7.1 | 48 | 2200 | |
| 3 | 145 | 720 | 2.8 | 6.8 | 4.4 | 1008 | whitening |
| 3 | 155 | 840 | 3.8 | 7.1 | 10 | 1596 | |
| 3 | 170 | 840 | 3.6 | 8.8 | 9.0 | 1512 | |
| 3 | 180 | 860 | 2.0 | 8.8 | 2.8 | 860 | |

**Claims**

1. Isotropically rolled or pressed sheet-like material comprising a mixture of 20 to 90% by weight of a thermoplastic resin and 10 to 80% by weight of a flaky filler, wherein:

(a) the degree of crystallinity is 10% or more;

(b) whitening is not observed in the surface layer when the surface layer is observed by a scanning electron microscope;

(c) the degree of orientation of crystals in the crystal plane parallel to the molecular chain, as determined by X-ray diffraction, is 55% or more as determined by the equation

Percentage degree of orientation = $(180 - H)/180 \times 100$

where H is the half-value width of the orientation distribution curve;

(d) the percentage change in thickness, when heated for one hour at a temperature 20°C lower than that at which crystals of the thermoplastic resin begin to melt, and then cooled to room temperature, is 2% or less;

(e) the notched Izod impact strength test value is at least twice that of the corresponding unrolled or unpressed sheet-like material; and

(f) the toughness is at least 1.5 times that of the corresponding unrolled or unpressed sheet-like material.

2. Material as claimed in claim 1 in which the thermoplastic resin is polyethylene or polypropylene.

3. Material as set forth in claim 2 in which the polyethylene has a molecular weight of 50,000 or more or the polypropylene has a molecular weight of 250,000 or more.

4. Material as claimed in any preceding claim in which the filler is mica.

5. A process for obtaining material as claimed in any preceding claim wherein material comprising a mixture of 20 to 90% by weight of a thermoplastic resin and 10 to 80% by weight of a flaky filler is rolled or pressed at a temperature above that at which the resin begins to melt and below that at which melting of the resin is complete, and a product having the specific properties is obtained.

6. A process as claimed in claim 5 in which the temperature is that at which the rate of absorption of heat by the resin, when heated at a constant rate of temperature increase, is a maximum.

**Patentansprüche**

1. Isotrop gewalztes oder gepreßtes folienartiges Material, enthaltend ein Gemisch aus 20 bis 90 Gew.-% eines thermoplastischen Harzes und 10 bis 80 Gew.-% eines flockenförmigen Füllstoffes, wobei

(a) der Kristallinitätsgrad 10% oder mehr ist,

(b) in der Oberflächenschicht keine Weißfärbung beobachtet wird, wenn die Oberflächenschicht mit Hilfe eines Scanning-Elektronenmikroskops beobachtet wird,

(c) der Orientierungsgrad der Kristalle in der Kristallebene parallel zu der Molekülkette, bestimmt durch Röntgenstrahlenbeugung, 55% oder mehr beträgt, gemäß der Bestimmung durch die Gleichung

Prozentualer Orientierungsgrad = $(180 - H)/180 \times 100$

worin H die Halbwertsbriete der Orientierungsverteilungskurve ist,

(d) die prozentuale Dickenveränderung beim Erhitzen während einer Stunde auf eine Temperatur, die 20°C niedriger als die Temperatur ist, bei der die Kristalle des thermoplastischen Harzes zu schmelzen beginnen, und nach anschließendem Abkühlen auf Raumtemperatur, 2% oder weniger ist,

(e) der Testwert der Izod-Kerbschlagzähigkeit mindestens das 2-fache des Wertes des entsprechenden nicht gewalzten oder nicht gepreßten folienartigen Materials ist und

(f) die Zähigkeit mindestens das 1,5-fache der des entsprechenden nicht gewalzten oder nicht gepreßten folienartigen Materials ist.

2. Material gemäß Anspruch 1, in dem das thermoplastische Harz Polyethylen oder Polypropylen ist.

3. Material gemäß Anspruch 2, in dem das Polyethylen ein Molekulargewicht von 50 000 oder mehr oder das Polypropylen ein Molekulargewicht von 250 000 oder mehr hat.

4. Material gemäß einem der vorhergehenden Patentansprüche, in dem der Füllstoff Glimmer ist.

5. Verfahren zur Herstellung des Materials gemäß einem der vorhergehenden Patentansprüche, bei dem ein Material, welches ein Gemisch aus 20 bis 90 Gew.-% eines thermoplastischen Harzes und 10 bis 80 Gew.-% eines flockenförmigen Füllstoffes enthält, bei einer Temperatur oberhalb der Temperatur, bei der das Harz zu schmelzen beginnt und unterhalb der Temperatur, bei der das Schmelzen des Harzes vollständig ist, gewalzt oder gepreßt wird und ein Produkt mit den spezifizierten Eigenschaften erhalten wird.

6. Verfahren gemäß Anspruch 5, bei dem die Temperatur die ist, bei der die Rate der Wärmeabsorption durch das Harz, wenn dieses mit einer konstanten Rate des Temperaturanstiegs erhitzt wird, ein Maximum ist.

# EP 0 122 686 B1

**Revendications**

1. Matériau en forme de feuille laminée ou formée à la presse isotropiquement, comprenant un mélange de 20 à 90% en poids d'une résine thermoplastique et de 10 à 80% en poids d'une matière de charge en paillettes, dans lequel:

(a) le degré de cristallinité est de 10% ou plus;

(b) on n'observe aucun blanchiment dans la couche superficielle lors de l'examen de cette dernière au microscope électronique à balayage;

(c) le degré d'orientation des cristaux dans le plan cristallin parallèle à la chaîne moléculaire, tel qu'il est déterminé par diffraction des rayons X, est de 55% ou plus comme cela est déterminé par l'équation:

pourcentage du degré d'orientation = $(180 - H)/180 \times 100$

dans laquelle H est la moitié de la largeur de la courbe de distribution de l'orientation;

(d) le pourcentage de changement d'épaisseur, lorsque le matériau est chauffé pendant une heure à une température de 20°C inférieure à celle à laquelle les cristaux de la résine thermoplastique commencent à entrer en fusion, puis refroidi à la température ambiante, est inférieure à 2% ou moins;

(e) la valeur de l'essai de résistance au choc Izod sur entaille est au moins 2 fois égale à celle du matériau correspondant en forme de feuille non-laminée ou non-formée à la presse; et

(f) la dureté est au moins 1,5 fois égale à celle du matériau correspondant en forme de feuille non-laminée ou non-formée à la presse.

2. Matériau selon la revendication 1, dans lequel la résine thermoplastique est du polyéthylène ou du polypropylène.

3. Matériau selon la revendication 2, dans lequel le polyéthylène a un poids moléculaire de 50 000 ou plus ou le polypropylène a un poids moléculaire de 250 000 ou plus.

4. Matériau selon l'une quelconque des revendications précédentes dans lequel la matière de charge est du mica.

5. Procédé destiné à l'obtention du matériau selon l'une quelconque des revendications précédentes, dans lequel un matériau comprenant un mélange de 20 à 90% en poids d'une résine thermoplastique et de 10 à 80% on poids d'une matière de charge en paillettes est laminé ou formé à la presse à une température supérieure à celle à laquelle la résine commence à entrer en fusion et au-dessous de la température à laquelle la fusion de la résine est achevée, et l'on obtient un produit ayant les propriétés spécifiées.

6. Procédé selon la revendication 5, dans lequel la température est celle à laquelle le taux d'absorption de la chaleur par la résine, lorsqu'elle est chauffée à une vitesse constante d'accroissement de la température, est maximal.

11

FIG. 1

FIG. 2

FIG. 3